# EUROPEAN PATENT SPECIFICATION

(11) **EP 1 917 426 B1**
(45) Date of publication and mention of the grant of the patent: **16.03.2011**
(21) Application number: 06795265.5
(22) Date of filing: 17.08.2006
(51) Int. Cl.: F02B 37/14, F02B 37/24, F02B 39/10

(54) **BOOST PRESSURE CONTROL**
LADEDRUCKREGELUNG
COMMANDE DE PRESSION D'ADMISSION

(30) Priority: 19.08.2005 JP 2005238894
(43) Date of publication of application: 07.05.2008
(73) Proprietor: Toyota Jidosha Kabushiki Kaisha, Toyota-shi, Aichi-ken, 471-8571 (JP)
(72) Inventor: OOTA, Hirohiko, Aichi-Ken 471-8571 (JP)
(74) Representative: TBK-Patent
(86) International application number: PCT/IB2006/002237
(87) International publication number: WO 2007/020524

(56) References cited:
- EP-A2- 1 336 737
- DE-A1- 10 061 847
- US-B1- 6 256 993

## Description

### 1. Field of the Invention

The invention relates to a boost-pressure control apparatus for an internal combustion engine, which includes a motor-assisted turbocharger, and a variable nozzle mechanism and control method of the internal combustion engine.

### 2. Description of the Related Art

Japanese Patent Application Publication No. JP-A-2003-239755 describes an internal combustion engine in which a boost-pressure control using a motor, and a boost-pressure control using a variable nozzle mechanism (hereinafter, referred to as "VN mechanism") are executed. In the internal combustion engine, a higher priority is given to the boost-pressure control using the VN mechanism than to the boost-pressure control using the motor. This prevents the interference between both the boost-pressure controls.

In the described internal combustion engine, when the actual boost pressure is lower than a target boost pressure, the opening amount of the VN mechanism (hereinafter, referred to as "VN opening amount") is decreased based on the difference between the actual boost pressure and the target boost pressure. Therefore, the pressure in the exhaust manifold (hereinafter, referred to as "exhaust manifold pressure") is increased. This increases the rotational speed of a compressor (hereinafter, referred to as "turbo speed"). As a result, the actual boost pressure increases.

However, the increase in the actual boost pressure lags behind the decrease in the VN opening amount. During the time lag, the VN opening amount may be further changed. In this case, the VN opening amount fluctuates, and the boost pressure also fluctuates due to the fluctuations in the VN opening amount. Further, the exhaust manifold pressure fluctuates due to the fluctuations in the VN opening amount. As a result, the amount of EGR gas fluctuates. Therefore, combustion may not be stably performed.

Document EP 1 336 737 A2 discloses a boost-pressure control apparatus. The apparatus includes: a turbocharger including a compressor, a turbine, and a motor; a boost-pressure detection means; a target boost-pressure calculation means; a variable nozzle mechanism that changes a flow speed of exhaust gas flowing to the turbine; and a boost-pressure control means that executes a boost-pressure control.

### DISCLOSURE OF THE INVENTION

It is the object of the present invention to provide an improved boost-pressure control apparatus and an improved boost-pressure control method which allow an accurate control of the boost-pressure.

With respect to the apparatus, the above object is solved by a boost-pressure control apparatus comprising the features of claim 1. With respect to the method, the above object is solved by a boost-pressure control method comprising the features of claim 12. Further advantageous developments are subject matter of the dependent claims.

The invention suppresses fluctuations in exhaust manifold pressure, and accurately controls boost pressure.

A first aspect of the invention relates to a boost-pressure control apparatus that includes a turbocharger, a boost-pressure detection means; a target boost-pressure calculation means; a variable nozzle mechanism, and a boost-pressure control means. The turbocharger includes a compressor provided in an intake passage, a turbine provided in an exhaust passage, and a motor that drives the compressor. The boost-pressure detection means detects the actual boost pressure of air compressed by the turbocharger. The target boost-pressure calculation means calculates a target boost pressure based on the engine speed and the engine load. The variable nozzle mechanism changes the flow speed of exhaust gas flowing to the turbine. The boost-pressure control means executes a boost-pressure control using the motor, and a boost-pressure control using the variable nozzle mechanism. When the deviation of the actual boost pressure from the target boost pressure is great, the boost-pressure control means gives a higher priority to the boost-pressure control using the motor than to the boost-pressure control using the variable nozzle mechanism. When the deviation is small, the boost-pressure control means gives a higher priority to the boost-pressure control using the variable nozzle mechanism than to the boost-pressure control using the motor.

A second aspect is similar to the first aspect, except that an opening-amount calculation means and an opening-amount correction means are further provided. The opening-amount calculation means calculates the opening amount of the variable nozzle mechanism based on the engine speed and the engine load. The opening-amount correction means corrects the opening amount calculated by the opening-amount calculation means, based on the deviation of the actual boost pressure from the target boost pressure. When the deviation of the actual boost pressure from the target boost pressure is small, the boost-pressure control means operates the variable nozzle mechanism so that an actual opening amount is equal to the opening amount corrected by the opening-amount correction means.

A third aspect is similar to the first aspect or the second aspect, except that the boost-pressure control means causes the motor to perform regenerative operation for a predetermined time when the actual boost pressure exceeds the target boost pressure.

A fourth aspect is similar to the first aspect or the second aspect, except that the boost-pressure control means operates the motor for a predetermined time when the boost pressure falls below the target boost pressure.

According to the first aspect, after the boost pressure is controlled to a value close to the target boost pressure using the motor, the boost pressure is controlled using the variable nozzle mechanism. This reduces the amount of change in the opening amount of the variable nozzle mechanism. Therefore, the boost pressure can be accurately controlled. Also, because the fluctuations in the exhaust manifold pressure are suppressed, the fluctuations in the amount of EGR gas are suppressed. Thus, combustion can be stably performed.

According to the second aspect, when the deviation of the actual boost pressure from the target boost pressure is small, the boost pressure control means operates the variable nozzle mechanism so that the actual opening amount is equal to the corrected opening amount. This reduces the amount of change in the opening amount of the variable nozzle mechanism during the boost-pressure control. Accordingly, the fluctuations in the opening amount of the variable nozzle mechanism are suppressed.

According to the third aspect, the rotational speed of the compressor decreases due to the regenerative operation of the motor. This reduces the amount by which the actual boost pressure exceeds the target boost pressure.

According to the fourth aspect, the rotational speed of the compressor increases due to the operation of the motor. This reduces the amount by which the actual boost pressure falls below the target boost pressure.

### BRIEF DESCRIPTION OF THE DRAWINGS

FIG. 1 is a diagram showing the configuration of the system according to a first embodiment of the invention;
FIGS. 2A and 2B are timing charts showing a boost-pressure control using only a VN mechanism;
FIGS. 3A, 3B, 3C, and 3D are timing charts showing the boost-pressure control according to the first embodiment of the invention;
FIG. 4A and 4B are flowcharts showing a routine executed by an ECU 60;
FIG. 5 is a diagram showing the operating state in which EGR is used; and
FIG. 6A and 6B are flowcharts showing the routine executed by the ECU 60 according to the second embodiment of the invention.

### DETAILED DESCRIPTION OF THE EXAMPLE EMBODIMENTS

Hereinafter, an embodiment of the invention will be described with reference to the drawings. In the drawings, the same components are denoted by the same reference numerals, and duplicated description thereof will be omitted.

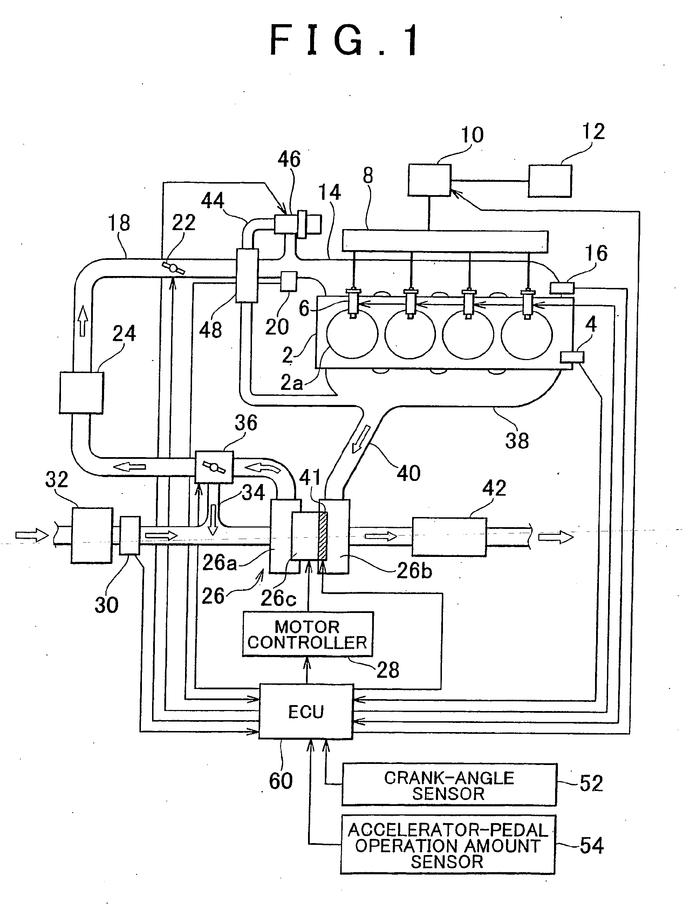

FIG. 1 shows the configuration of a diesel engine system according to a first embodiment of the invention. The diesel engine system according to the first embodiment includes a motor-assisted turbocharger.

The system according to the embodiment includes an engine body 2 that has four cylinders 2a. The engine body 2 is provided with a coolant temperature sensor 4. In the system shown in FIG. 1, the engine body 2 includes four injectors 6 that correspond to the four cylinders 2a. Each injector 6 injects fuel under high-pressure directly into the cylinder 2a. The four injectors 6 are connected to a common rail 8. The common rail 8 is connected to a fuel tank 12 via a supply pump 10. After pumping fuel from the fuel tank 12, the supply pump 10 compresses the fuel to a given pressure, and supplies the compressed fuel to the common rail 8.

The engine body 2 is connected to an intake manifold 14. The intake manifold 14 is provided with a boost-pressure sensor 16. The boost-pressure sensor 16 measures the pressure of air compressed by a compressor 26a described later (hereinafter, the pressure will be referred to as "actual boost pressure PIM"). An intake manifold 14 is connected to an intake passage 18. An intake-air temperature sensor 20 is provided near the junction of the intake manifold 14 and the intake passage 18. The intake-air temperature sensor 20 measures the temperature of the compressed air. An intake-air throttle valve 22 is provided upstream of the intake-air temperature sensor 20 in the intake passage 18. Further, an intercooler 24 is provided upstream of the intake-air throttle valve 22. The intercooler 24 cools the compressed air.

The compressor 26a of the motor-assisted turbocharger 26 (hereinafter, referred to as "MAT") is provided upstream of the intercooler 24. The turbine 26b of the MAT 26 is provided in an exhaust passage 40, described later. The impeller (not shown) of the compressor 26a is connected to the impeller of the turbine 26b via a connection shaft. Thus, when the impeller of the turbine 26b is rotated by exhaust energy, the impeller of the compressor 26a is rotated. A motor 26c, which is an alternating current motor, is provided between the compressor 26a and the turbine 26b. The motor 26c is connected to a motor controller 28. The motor controller 28 supplies the motor 26c with electric power stored in a battery (not shown). The drive shaft of the motor 26c functions also as the described connection shaft. Accordingly, the motor 26c rotates the impeller of the compressor 26a. The motor 26c also performs regenerative operation. The motor controller 28 charges the battery with the electric power generated by the regenerative operation of the motor 26c.

An airflow meter 30 is provided upstream of the compressor 26a. The airflow meter 30 measures the amount of air taken into the intake passage 18 from the atmosphere (i.e., the amount of intake air). An air cleaner 32 is provided upstream of the airflow meter 30. Further, the area upstream of the air cleaner 32 is open to the atmosphere.

One end of an intake bypass passage 34 is connected to the intake passage 18 at a position between the compressor 26a and the airflow meter 30. The other end of the intake bypass passage 34 is connected to the intake passage 18 at a position between the compressor 26a and the intercooler 24. That is, the intake bypass passage 34 connects the areas upstream and downstream of the compressor 26a. An intake bypass valve 36 is provided at the junction of the intake passage 18 and the other end of the intake bypass passage 34. When the intake bypass valve 36 opens, part of the air compressed by the MAT 26 is returned to the area upstream of the compressor 26a via the intake bypass passage 34. This reduces the pressure of the compressor 26a, and prevents turbo surge.

The engine body 2 is also connected to an exhaust manifold 38 that is opposed to the intake manifold 14. The exhaust manifold 38 is connected to the exhaust passage 40. As described above, the turbine 26b of the MAT 26 is provided in the exhaust passage 40. The impeller of the turbine 26b is rotated by energy of exhaust gas flowing in the exhaust passage 40.

A variable nozzle mechanism (hereinafter, referred to as "VN mechanism") 41 is provided near the impeller of the turbine 26b. The VN mechanism is a adjustable nozzle. The flow speed of the exhaust gas flowing to the impeller of the turbine 26b can be controlled by controlling the opening amount of the variable nozzle, i.e., the opening amount of the VN mechanism 41 (hereinafter, referred to as "VN opening amount"). More specifically, by decreasing the VN opening amount, the flow speed of the exhaust gas flowing to the impeller can be increased. By increasing the VN opening amount, the flow speed of the exhaust gas flowing to the impeller can be decreased. A catalyst 42 that purifies the exhaust gas is provided downstream of the turbine 26b.

One end of an EGR passage 44 is connected to the exhaust manifold 38. The other end of the EGR passage 44 is connected to the intake passage 18 at a position near the junction of the intake manifold 14 and the intake passage 18. An EGR valve 46 is provided near the junction of the intake passage 18 and the other end of the EGR passage 44. An EGR cooler 48, which cools the exhaust gas flowing in the EGR passage 44, is provided in the EGR passage 44. When the EGR valve 46 opens, part of the exhaust gas is returned to the intake passage 18 via the EGR passage 44 and the EGR cooler 48. Part of the exhaust gas is supplied to each cylinder 2a based on the difference between the pressure in the exhaust manifold 38 (hereinafter referred to as "exhaust manifold pressure") and the pressure in the intake manifold 14 (hereinafter, referred to as "intake manifold pressure"). Because the amount of oxygen contained in exhaust gas is less than the amount of oxygen contained in air, the amount of generated NOx can be reduced.

The system according to the first embodiment includes an ECU (electronic control unit) 60. The input-side of the ECU 60 is connected to the coolant temperature sensor 4, the boost-pressure sensor 16, the intake-air temperature sensor 20, the airflow meter 30, a crank-angle sensor 52, an accelerator-pedal operation amount sensor 54, and the like. The crank-angle sensor 52 detects the rotational angle of the crankshaft (not shown), which is connected to the pistons of the cylinders 2a. The accelerator-pedal operation amount sensor 54 detects the opening amount ACCP of an accelerator pedal (referred to also as "accelerator-pedal depression amount"). The output-side of the ECU 60 is connected to the injectors 6, the pump 10, the motor controller 28, the intake bypass valve 36, the VN mechanism 41, the EGR valve 46, and the like. The ECU 60 calculates an engine speed NE based on the output from the crank angle sensor 52. The ECU 60 calculates the amount of electric power supplied to the motor 26c. Further, the ECU 60 instructs the motor controller 28 to supply the calculated amount of electric power to the motor 26c.

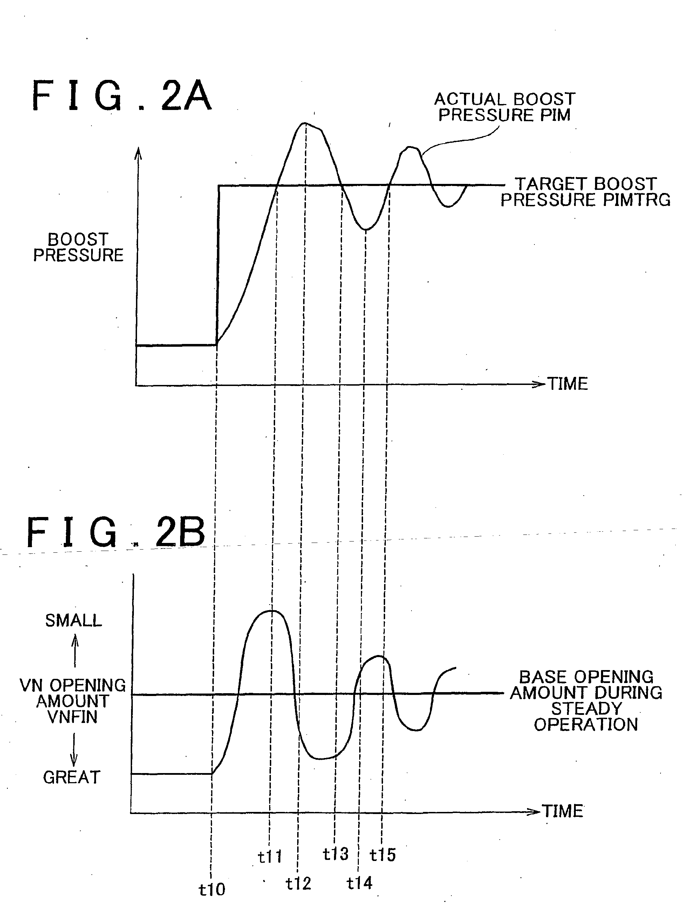

In the described conventional device, a higher priority is given to the boost-pressure control using the VN mechanism than to the boost-pressure control using the motor to prevent the interference between both the boost-pressure controls. FIGS. 2A and 2B are the timing charts showing the boost-pressure control using only the VN mechanism. More specifically, FIG. 2A shows the changes in the actual boost pressure PIM and target boost pressure PIMTRG FIG. 2B shows the change in the VN opening amount.

At time point t10, the target boost pressure PIMTRG is increased by the movement of the accelerator pedal. The VN opening amount is decreased to increase the actual boost pressure PIM in accordance with the increased target boost pressure PIMTRG. The VN opening amount is obtained by summing a base opening amount and a feedback opening-amount. The base opening amount is calculated based on the engine speed NE and the engine load. The feedback opening-amount is calculated based on the difference between the target boost pressure PIMTRG and the actual boost pressure PIM (hereinafter, referred to as "difference PIMTRG-PIM"). The feedback opening-amount is a term that corrects the VN opening amount. The feedback opening-amount has a greater effect on the VN opening amount than the base opening amount. When the VN opening amount decreases, the rotational speed of the turbine increases. This increases the rotational speed of the compressor (hereinafter, referred to as "turbo speed"). As a result, the actual boost pressure PIM increases.

The boost-pressure sensor is generally provided in the intake manifold. Therefore, there is a space in intake passage over which air passes between the compressor and the boost-pressure sensor. As a result, the increase in the actual boost pressure PIM lags behind the increase in the turbo speed. Even during the time lag, the feedback opening-amount is calculated based on the difference "PIMTRG-PIM", and the VN opening amount is further decreased. As a result, the VN opening amount is excessively decreased.

After the actual boost pressure PIM reaches the target boost pressure PIMTRG at time point t11, the VN opening amount is increased. However, the actual boost pressure PIM does not decrease immediately after the VN opening amount is increased. That is, the actual pressure PIM continues to increase until time point t12. Accordingly, as shown in FIG. 2A, the actual boost pressure PIM exceeds the target boost pressure PIMTRG Also, the decrease in the actual boost pressure PIM and the decrease in the turbo speed lag behind the increase in the VN opening amount. Therefore, the VN opening amount is excessively increased.

Then, after the actual boost pressure PIM reaches the target boost pressure PIMTRG again at time point t13, the VN opening amount is decreased. However, the actual boost pressure PIM does not increase immediately after the VN opening amount is decreased. That is, the actual boost pressure PIM continues to decrease until time point t14. Accordingly, as shown in FIG. 2A, the actual boost pressure PIM falls below the target boost pressure PIMTRG.

As described above, when a higher priority is given to the boost-pressure control using the VN mechanism than to the boost-pressure control using the motor, the VN opening amount greatly fluctuates, as shown in FIG. 2B. As a result, the actual boost pressure PIM greatly fluctuates, as shown in FIG. 2A. That is, when a higher priority is given to the boost-pressure control using the VN mechanism, it is difficult to control the actual boost pressure PIM to the target boost pressure PIMTRG.

Further, if the VN opening amount greatly fluctuates as described above, the exhaust manifold pressure also greatly fluctuates. Accordingly, unless the opening amount of the EGR valve is controlled separately, the amount of EGR gas also greatly fluctuates. Particularly when the exhaust manifold pressure is increased by excessively decreasing the VN opening amount, the difference between the exhaust manifold pressure and the intake manifold pressure increases, and the amount of EGR gas increases. This decreases the ratio of fresh gas to burned gas. As a result, combustion may not be stably performed, and for example, a misfire may occur.

According to the first embodiment of the invention, when the deviation of the actual boost pressure PIM from the target boost pressure PIMTRG is great, a higher priority is given to the boost-pressure control using the motor 26c than to the boost-pressure control using the VN mechanism 41. That is, when the deviation is great, the motor 26c operates, but the feedback opening-amount VNFB is not calculated. Accordingly, the VN opening amount VNFIN is equal to the base opening amount VNBASE. When the deviation of the actual boost pressure PIM from the target boost pressure PIMTRG is small, a higher priority is given to the boost-pressure control using the VN mechanism 41 than to the boost-pressure control using the motor 26c. That is, the feedback opening amount VNFB is calculated, and the VN opening amount VNFIN is obtained by summing the feedback opening amount VNFB and the base opening amount VNBASE.

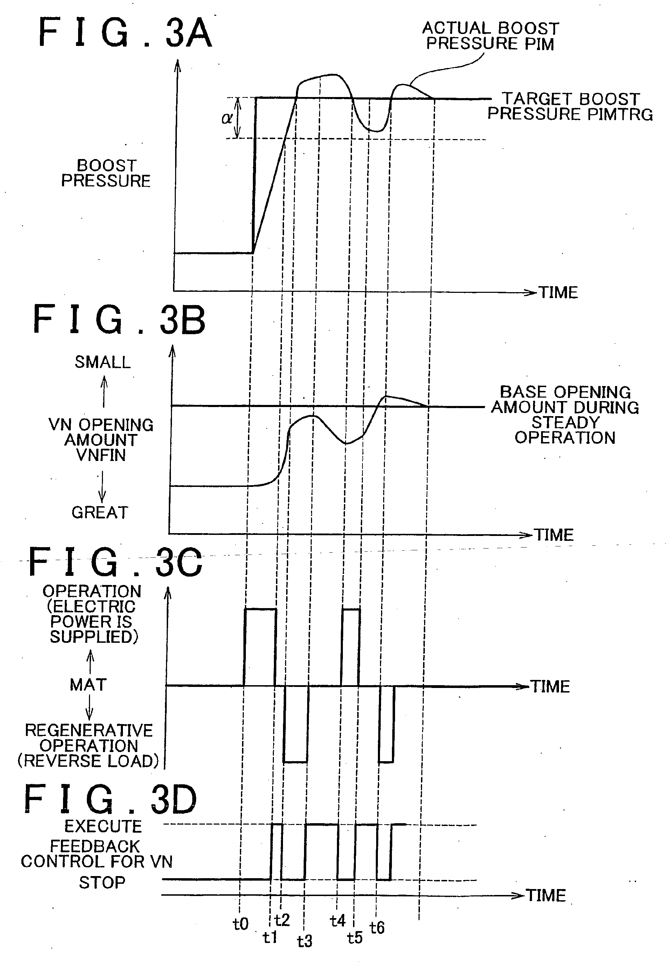

FIGS. 3A to 3D are timing charts showing the boost-pressure control according to the first embodiment. More specifically, FIG. 3A shows the changes in the actual boost pressure PIM and the target boost pressure PIMTRG. FIG. 3B shows the change in the VN opening amount VNFIN. FIG. 3C shows the operating state of the MAT. FIG. 3D shows whether the feedback control for the VN mechanism 41 (i.e., the calculation of the feedback opening amount VNFB) is performed. FIG. 3B also shows the base opening amount during steady operation. The VN opening amount is eventually controlled to this base opening amount.

At time point t0, the target boost pressure PIMTRG is increased by the movement of the accelerator pedal. Because the difference between the increased target boost pressure PIMTRG and the actual boost pressure PIM is greater than a reference value α (i.e., the deviation of the actual boost pressure PIM from the target boost pressure PIMTRG is great), the motor controller 28 supplies electric power to the motor 26c. The supply of electric power continues until the difference "PIMTRG-PIM" is equal to the reference value α at time point t1. As a result, the impeller of the compressor 26a is rotated, and the turbo speed is increased. This increases the actual boost pressure PIM. As shown in FIG. 3D, the feedback opening-amount VNFB of the VN mechanism 41 is not calculated during the period from t0 to t1. That is, the VN opening amount VNFIN is controlled without regard to the difference "PIMTRG-PIM" during the period from t0 to t1. Accordingly, the VN opening amount VNFIN is equal to the base opening amount VNBASE that has a smaller effect on the VN opening amount VNFIN than the feedback opening-amount VNFB. As a result, the VN opening amount VNFIN gradually decreases during the period from time point t0 to time point t1, as shown in FIG. 3B. The exhaust manifold pressure is hardly increased by such a small decrease in the VN opening amount VNFIN. Thus, the actual boost pressure PIM can be increased without increasing the exhaust manifold pressure.

After the difference "PIMTRG-PIM" reaches the reference value α at time point t1, the supply of electric power to the motor 26c is stopped. At the same time, the feedback opening-amount VNFB of the VN mechanism 41 is calculated as shown in FIG. 3D. Thus, the VN opening amount VNFIN is equal to the sum of the base opening amount VNBASE and the feedback opening-amount VNFB. Because the motor 26c operates to increase the actual boost pressure PIM during the period from time point t0 to time point t1, the actual boost pressure PIM is close to the target boost pressure PIMTRG at time point t1. Accordingly, the feedback opening amount VNFB calculated based on the difference "PIMTRG-PIM" is smaller than the feedback opening-amount VNFB in the case shown in FIG. 2B (i.e., in the case where the motor is not driven).

Then, after the actual boost pressure PIM reaches the target boost pressure PIMTRG at time point t2, the motor 26c performs the regenerative operation while the feedback opening-amount VNFB is fixed. The motor 26c continues to perform the regenerative operation until time point t3. During the period from time point t2 to time point t3, the engine speed NE and the engine load increase. Therefore, the base opening amount VNBASE is calculated to decrease the VN opening amount VNFIN. As a result, the VN opening amount VNFIN slightly decreases during the period from time point t2 to time point t3, as shown in FIG. 3B. Because the turbo speed decreases due to the regenerative operation of the motor 26c, it is possible to reduce the amount by which the boost pressure PIM exceeds the target boost pressure PIMTRG.

During the period from time point t3 to time point t4, the feedback opening amount VNFB is calculated again, and the VN mechanism 41 decreases the actual boost pressure PIM. Because the MAT 26 performs the regenerative operation during the period from time point t2 to time point t3 before executing the boost-pressure control using the VN mechanism 41, the VN opening amount VNFIN is not excessively increased.

After the actual boost pressure PIM reaches the target boost pressure PIMTRG again at time point t4, the motor 26c operates while the feedback opening-amount VNFB is fixed. The motor 26c continues to operate from time point t4 until a predetermined time elapses, in this case, time point t5. During the period from time point t4 until time point t5, the engine speed NE and the engine load increase. Therefore, the base opening amount VNBASE is calculated to decrease the VN opening amount VNFIN. As a result, the VN opening amount VNFIN slightly decreases during the period from time point t4 to time point t5, as shown in FIG. 3B. Because the turbo speed increases due to the operation of the motor 26c, it is possible to reduce the amount by which the boost pressure PIM falls below the target boost pressure PIMTRG

During the period from time point t5 to time point t6, the feedback opening amount VNFB is calculated again, and the VN mechanism 41 increases the actual boost pressure PIM. Because the MAT 26 operates during the period from time point t4 to time point t5 before executing the boost-pressure control using the VN mechanism 41, the VN opening amount VNFIN is not excessively decreased.

Further, after the actual boost pressure PIM reaches the target boost pressure PIMTRG at time point t6, the motor 26c performs the regenerative operation for a predetermined time while the feedback opening-amount VNFB is fixed. This reduces the amount by which the actual boost pressure PIM exceeds the target boost pressure PIMTRG, as in the period from time point t2 to time point t3.

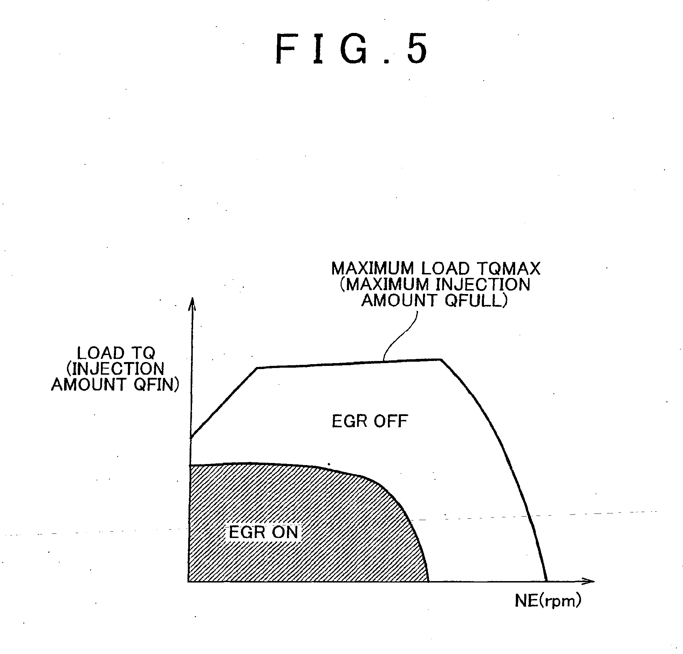

Thus, in the first embodiment, when the deviation of the actual boost pressure PIM from the target boost pressure PIMTRG is great, the actual boost pressure PIM is increased to a value close to the target boost pressure PIMTRG by operating the motor 26c. Then, the actual boost pressure PIM is increased by executing the feedback control for the VN mechanism 41 (i.e., by adding the feedback opening amount VNFB to the VN opening amount VNFIN). As a result, an excessive decrease in the VN opening amount VNFIN is prevented. That is, the fluctuations in the VN opening amount VNFIN are prevented. Also, because the fluctuations in the exhaust manifold pressure are prevented, the fluctuations in the amount of exhaust gas are prevented. Accordingly, when the EGR (exhaust gas recirculation) is used, that is, when the engine speed and the engine load are low, as shown in FIG. 5, a sufficient amount of EGR gas can be stably obtained. Thus, combustion can be stably performed. Further, as soon as the actual boost pressure PIM exceeds the target boost pressure PIMTRG, the motor 26c performs the regenerative operation. As soon as the actual boost pressure PIM falls below the target boost pressure PIMTRG, the motor 26c operates. This reduces the amount by which the actual boost pressure PIM exceeds or falls below the target boost pressure PIMTRG. Accordingly, the actual boost pressure PIM can be controlled to the target boost pressure PIMTRG more quickly.

During the period from time point t0 to time point t1, the amount of electric power supplied to the motor 26c may be constant, or may gradually decrease over time.

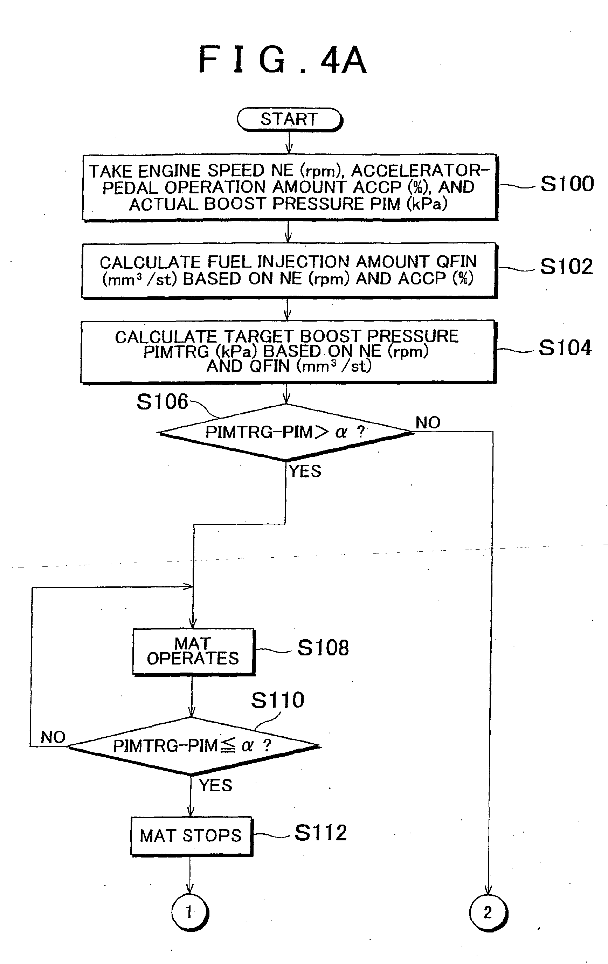

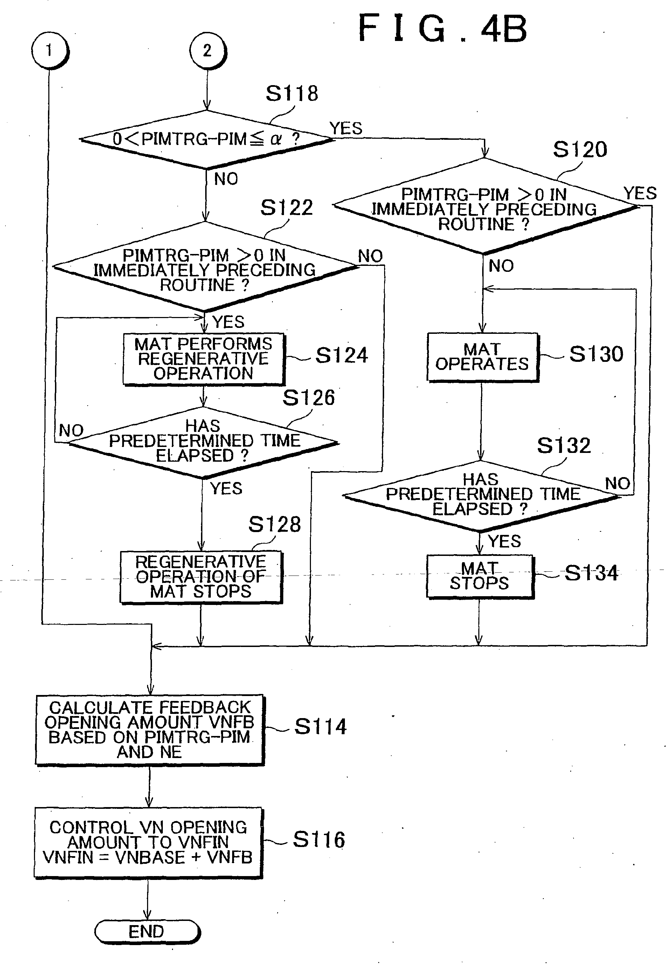

FIG. 4A and 4B are flowcharts showing the routine executed by the ECU 60 in the first embodiment. In the routine shown in FIG. 4A, first, the engine speed NE (rpm), the accelerator-pedal operation amount ACCP (%), and the actual boost pressure PIM (kPa) are taken into the ECU 60 (step 100).

Next, the amount of fuel to be injected (hereinafter, referred to as "fuel injection amount") QFIN (mm³/st) is calculated based on the engine speed NE and the accelerator-pedal operation amount ACCP, with reference to a map stored in the ECU 60 in advance (step 102). As the engine speed NE and the accelerator-pedal operation amount ACCP increase, that is, as the engine load increases, the fuel injection amount QFIN increases.

Next, the target boost pressure PIMTRG (kPa) is calculated based on the engine speed NE and the fuel injection amount QFIN, with reference to a map stored in the ECU 60 in advance (step 104). The fuel injection amount QFIN is proportional to the engine load TQ. Accordingly, in step 104, the target boost pressure PIMTRG is calculated based on the engine speed NE and the engine load TQ.

Next, it is determined whether the difference "PIMTRG-PIM" between the target boost pressure PIMTRG and the actual boost pressure PIM is greater than or equal to the reference value α (step 106). That is, in step 106, it is determined whether the actual boost pressure PIM is lower than the target boost pressure PIMTRG, and the deviation of the actual boost pressure PIM from the target boost pressure PIMTRG is great.

If it is determined that the difference "PIMTRG-PIM" is greater than the reference value α in step 106, step 108 is executed. In step 108, electric power is supplied to the motor 26c (i.e., the MAT 26 operates). For example, as shown in FIG. 3C, electric power is supplied to the MAT 26 at time point t0. As a result, the actual boost pressure PIM increases as shown in FIG. 3A. The ECU 60 calculates the base opening amount VNBASE based on the engine speed NE and the engine load by executing another routine separately from this routine. When the MAT 26 operates, the VN opening amount VNFIN of the VN mechanism 41 is equal to the base opening amount VNBASE. That is, the feedback opening-amount VNFB described below is not added to the VN opening amount VNFIN. Therefore, as shown in FIG. 3B, the VN opening amount VNFIN gradually decreases while the MAT 26 operates from time point t0 to time point t1.

Then, it is determined whether the difference "PIMTRG-PIM" is smaller than or equal to the reference value α (step 110). That is, in step 110, it is determined whether the deviation of the actual boost pressure PIM from the target boost pressure PIMTRG has decreased. If it is determined that the difference "PIMTRG-PIM" is smaller than or equal to the reference value α in step 110, the supply of electric power to the motor 26c is stopped in step 112 (i.e., the MAT 26 stops). For example, when the difference "PIMTRG-PIM" is smaller than or equal to the reference value α at time point t1 as shown in FIG. 3A, the supply of electric power to the MAT 26 is stopped at time point t1 as shown in FIG. 3C.

Further, the feedback opening-amount VNFB is calculated based on the difference "PIMTRG-PIM" and the engine speed NE, with reference to a map stored in the ECU 60 in advance (step 114). In the map, as the difference "PIMTRG-PIM" increases, the feedback opening-amount VNFB decreases. Subsequently, the VN mechanism 41 is controlled so that the actual VN opening amount is equal to the VN opening amount VNFIN (step 116). In step 116, the VN opening amount VNFIN is equal to the sum of the base opening amount VNFB calculated by the described separate routine, and the feedback opening-amount VNFB calculated in step 114. Thus, when the difference "PIMTRG-PIM" is smaller than or equal to the reference value α, for example, the feedback control for the VN mechanism 41 is executed as shown in FIG. 3D. That is, the feedback opening-amount VNFB is added to the VN opening amount VNFIN as a correction term. Then, the routine is terminated.

Next, after the routine restarts, a negative determination is made in step 106. That is, it is determined that the difference "PIMTRG-PIM" is smaller than or equal to the reference value α in step 106, and step 118 is performed. In step 118, it is determined whether the difference "PIMTRG-PIM" is greater than 0, and is smaller than or equal to the reference value α. That is, it is determined whether the actual boost pressure PIM is lower than the target boost pressure PIMTRG, and the deviation of the actual boost pressure PIM from the target boost pressure PIMTRG is small. If it is determined that the difference "PIMTRG-PIM" is greater than 0, and is smaller than or equal to the reference value α (i.e., if it is determined that the actual boost pressure PIM is lower than the target boost pressure PIMTRG, and the deviation of the actual boost pressure PIM from the target boost pressure PIMTRG is small) in step 118, step 120 is performed. In step 120, it is determined whether the difference "PIMTRG-PIM" was greater than 0 in a immediately preceding routine (i.e., it-is determined whether the actual boost pressure PIM was lower than the target boost pressure PIMTRG also in the immediately preceding routine). If it is determined that the difference "PIMTRG-PIM" was greater than 0 in the immediately preceding routine (i.e., if it is determined that the actual boost pressure PIM was lower than the target boost pressure PIMTRG also in the immediately preceding routine), steps 114 and 116 are performed. Thus, when the actual boost pressure PIM is slightly lower than the target boost pressure PIMTRG, the actual boost pressure PIM is increased by adding the feedback opening-amount VNFB to the VN opening amount VNFIN. For example, as shown in FIGS. 3C and 3D, the MAT 26 stops and the feedback control for the VN mechanism 41 is executed during the period from time point t1 to time point t2.

After the actual boost pressure PIM increases so that the difference "PIMTRG-PIM" is smaller than or equal to 0 (i.e., after the actual boost pressure PIM reaches a value greater than or equal to the target boost pressure PIMTRG), a negative determination is made in step 118, and step 122 is performed. In step 122, it is determined whether the difference "PIMTRG-PIM" was greater than 0 in the immediately preceding routine (i.e., it is determined whether the actual boost pressure PIM was lower than the target boost pressure PIMTRG in the immediately preceding routine, and the actual boost pressure PIM exceeds the target boost pressure PIMTRG in the routine that is currently performed). If it is determined that the difference "PIMTRG-PIM" was greater than 0 in the immediately preceding routine (i.e., if it is determined that the actual boost pressure PIM exceeds the target boost pressure PIMTRG in the routine that is currently performed) in step 122, step 124 is performed. In step 124, a reverse load is applied to the motor 26c so that the MAT 26 performs the regenerative operation. Then, when it is determined that a predetermined time has elapsed in step 126, the regenerative operation of the MAT 26 stops in step 128. For example, as shown in FIG. 3C, the MAT 26 performs the regenerative operation during the period from time point t2 to time point t3. Because the increase in the turbo speed is suppressed by the regenerative operation, it is possible to reduce the amount by which the actual boost pressure PIM exceeds the target boost pressure PIMTRG.

After the regenerative operation of the MAT 26 stops, steps 114 and 116 are performed. For example, as shown in FIGS. 3B and 3D, the feedback opening-amount VNFB is added to the VN opening amount VNFIN to increase the VN opening amount VNFIN during the period from time point t3 to time point t4. As a result, the actual boost pressure PIM decreases.

Then, after the actual boost pressure PIM decreases so that the difference "PIMTRG-PIM" is greater than 0, and is smaller than or equal to the reference value α (i.e., after the actual boost pressure PIM reaches a value lower than the target boost pressure PIMTRG), an affirmative determination is made in step 118, and step 120 is performed. Because the difference "PIMTRG-PIM" was smaller than or equal to 0 in the immediately preceding routine, a negative determination is made in step 120. That is, it is determined that the actual boost pressure PIM falls below the target boost pressure PIMTRG in step 120. In this case, step 130 is performed. In step 130, electric power is supplied to the motor 26c (i.e., the MAT 26 operates). Then, when it is determined that a predetermined time has elapsed in step 132, the supply of electric power to the motor 26c is stopped (i.e., the MAT 26 stops) in step 134. For example, as shown in FIG. 3C, the MAT 26 operates during the period from time point t4 to time point t5. Because the turbo speed increases due to the operation of the MAT 26, it is possible to reduce the amount by which the actual boost pressure PIM falls below the target boost pressure PIMTRG.

After the MAT 26 stops, steps 114 and 116 are performed. For example, as shown in FIGS. 3B and 3D, the feedback opening-amount VNFB is added to the VN opening amount VNFIN to decrease the VN opening amount VNFIN during the period from time point t5 to time point t6. As a result, the actual boost pressure PIM increases.

As described above, in the routine in FIG. 4A and 4B, if the difference "PIMTRG-PIM" is greater than the reference value α, the actual boost pressure PIM is increased by operating the MAT 26, without calculating the feedback opening amount VNFB. When the difference "PIMTRG-PIM" changes from a value greater than the reference value α to a value greater than 0 and smaller than or equal to the reference value α, the actual boost pressure PIN is increased by stopping the MAT 26, and adding the feedback opening amount VNFB to the VN opening amount VNFIN. This reduces the amount of change in the VN opening amount VNFIN. As a result, the fluctuations in the VN opening amount VNFIN are suppressed. Accordingly, the actual boost pressure can be controlled to the target boost pressure PIMTRG quickly. Also, because the fluctuations in the VN opening amount VNFIN are suppressed, the fluctuations in the exhaust manifold pressure are suppressed. Thus, the fluctuations in the amount of EGR gas are prevented, and combustion is stably performed. Further, when the actual boost pressure PIM exceeds the target boost pressure, the MAT 26 performs the regenerative operation. Conversely, when the actual boost pressure PIM falls below the target boost pressure PIMTRG, the MAT 26 operates. This reduces the amount by which the actual boost pressure PIM exceeds or falls below the target boost pressure PIMTRG. This further suppresses the fluctuations in the VN opening amount VNFIN. As a result, the actual boost pressure PIM can be controlled to the target boost pressure PIMTRG quickly.

In the first embodiment, when the ECU 60 performs steps 106, 108, 110, 112, and 116, the "boost-pressure control means" in the first aspect is realized. When the ECU 60 performs step 114, "the opening-amount correction means" in the second aspect is realized. When the ECU 60 performs steps 106, 108, 110, 112, 116, 118, 122, 124, and 128, "the boost-pressure control means" in the third aspect is realized. When the ECU 60 performs steps 106, 108, 110, 112, 116, 118, 120, 130, and 134, "the boost-pressure control means" in the fourth aspect is realized.

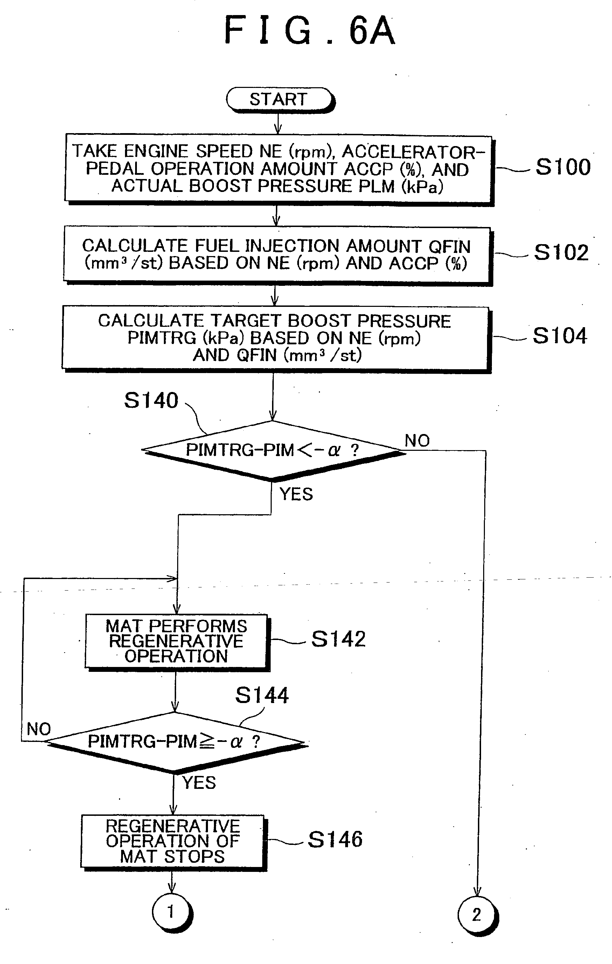

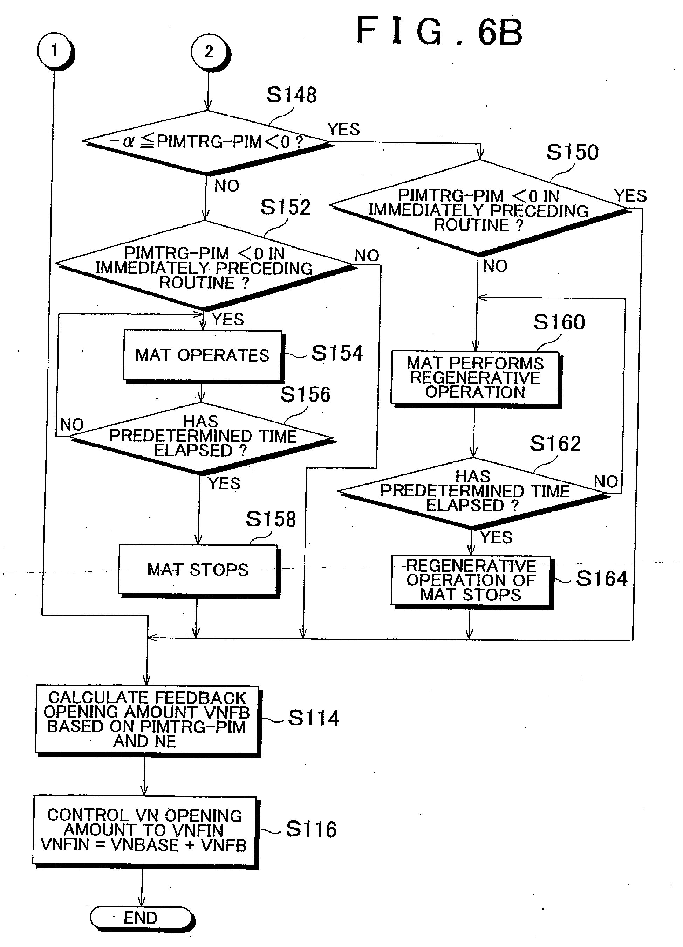

Next, a second embodiment of the invention will be described with reference to FIG. 6A and 6B. In a system according to a second embodiment of the invention, the hardware configuration in FIG. 1 is employed and the ECU 60 executes a routine in FIG. 6A and 6B described later.

In the first embodiment, the boost-pressure control is executed when the target boost pressure PIMTRG is increased to the value higher than the actual boost pressure PIM. In the second embodiment, the boost-pressure control is executed when the target boost pressure PIMTRG is decreased to a value lower than the actual boost pressure PIM. In the second embodiment as well, if the deviation of the actual boost pressure PIM from the target boost pressure PIMTRG is great, a higher priority is given to the boost-pressure control using the motor 26c than to the boost-pressure control using the VN mechanism 41. That is, if the deviation of the actual boost pressure PIM from the target boost pressure PIMTRG is great, the feedback opening-amount VNFB is not calculated, and the motor 26c performs the regenerative operation. The turbo speed decreases due to the regenerative operation, and the actual boost pressure PIM decreases. In this case, the VN opening amount VNFIN is equal to the base opening amount VNBASE calculated based on the engine speed NE and the engine load. Accordingly, the VN opening amount VNFIN gradually increases, unlike the first embodiment in which the VN opening amount gradually decreases during the period from time point t0 to time point t1. Then, after the actual boost pressure PIM decreases so that the difference "PIMTRG-PIM" is equal to - α, the regenerative operation of the motor 26c stops. At the same time, the feedback opening-amount VNFB of the VN mechanism 41 is calculated. Accordingly, the VN opening amount VNFIN is equal to the sum of the base opening amount VNBASE and the feedback opening-amount VNFB. Because the regenerative operation has been performed in advance, the actual boost pressure PIM has already decreased to a value close to the target boost pressure PIMTRG. This reduces the feedback opening-amount VNFB calculated based on the difference "PIMTRG-PIM". That is, the VN opening amount VNFIN is not excessively increased. Then, after the actual boost pressure PIM further decreases, and falls below the target boost pressure PIMTRG as a result of controlling the VN mechanism 41, the motor 26c operates for a predetermined time as in the first embodiment. This reduces the amount by which the actual boost pressure PIM falls below the target boost pressure PIMTRG. Further, after the actual boost pressure PIM increases, and exceeds the target boost pressure PIMTRG as a result of controlling the VN mechanism 41, the motor 26c performs the regenerative operation for a predetermined time as in the first embodiment. This reduces the amount by which the actual boost pressure PIM exceeds the target boost pressure PIMTRG.

Thus, in the second embodiment, when the deviation of the actual boost pressure PIM from the target boost pressure PIMTRG is great, the actual boost pressure PIM is decreased to a value close to the target boost pressure PIMTRG by causing the MAT 26 to perform the regenerative operation. Then, the actual boost pressure PIM is decreased by executing the feedback control for the VN mechanism 41 (i.e., by adding the feedback opening amount VNFB to the VN opening amount VNFIN). As a result, the excessive increase in the VN opening amount VNFIN is prevented. That is, the fluctuations in the VN opening amount VNFIN are prevented. Also, because the fluctuations in the exhaust manifold pressure are prevented, the fluctuations in the amount of exhaust gas are prevented. Accordingly, when the EGR (exhaust gas recirculation) is used, that is, when the engine speed and the engine load are low as shown in FIG. 5, a sufficient amount of EGR gas can be stably obtained. Thus, combustion can be stably performed. Further, when the actual boost pressure PIM falls below the target boost pressure PIMTRG, the motor 26c operates. Conversely, when the actual boost pressure PIM exceeds the target boost pressure PIMTRG, the motor 26c performs the regenerative operation. This reduces the amount by which the actual boost pressure PIM falls below or exceeds the target boost pressure PIMTRG. Accordingly, the actual boost pressure PIM can be controlled to the target boost pressure PIMTRG more quickly.

FIG. 6A and 6B are flowcharts showing the routine executed by the ECU 60 according to the second embodiment. First, steps 100, 102, and 104 are performed as in the first embodiment.

Next, it is determined whether the difference "PIMTRG-PIM" is smaller than the reference value -α (step 140). In step 140, it is determined whether the actual boost pressure PIM is higher than the target boost pressure PIMTRG, and the deviation of the actual boost pressure PIM from the target boost pressure PIMTRG is great.

If it is determined that the difference "PIMTRG-PIM" is smaller than the reference value -α in step 140, step 142 is performed. In step 142, a reverse load is applied to the motor 26c, and the MAT 26 performs the regenerative operation. As a result, the turbo speed decreases, and the actual boost pressure PIM decreases. The ECU 60 calculates the base opening amount VNBASE based on the engine speed NE and the engine load by executing another routine separately from this routine. When the MAT 26 performs the regenerative operation, the VN opening amount VNFIN of the VN mechanism 41 is equal to the base opening amount VNBASE. That is, the feedback opening-amount VNFB described below is not added to the VN opening amount VNFIN. Therefore, the VN opening amount VNFIN gradually increases while the MAT 26 performs the regenerative operation.

Then, it is determined whether the difference "PIMTRG-PIM" is greater than or equal to the reference value -α (step 144). In step 144, it is determined whether the deviation of the actual boost pressure PIM from the target boost pressure PIMTRG has decreased. If it is determined that the difference "PIMTRG-PIM" is greater than or equal to the reference value -α, the regenerative operation of the MAT 26 stops in step 146.

Further, the feedback opening amount VNFB is calculated based on the difference "PIMTRG-PIM" and the engine speed NE, with reference to a map stored in the ECU 60 in advance (step 114). In the map, as the difference "PIMTRG-PIM" decreases, the feedback opening amount VNFB increases. Subsequently, the VN mechanism 41 is controlled so that the actual VN opening amount is equal to the VN opening amount VNFIN (step116). In step 116, the VN opening amount VNFIN is equal to the sum of the base opening amount VNFB calculated by the described separate routine, and the feedback opening-amount VNFB calculated in step 114. Thus, when the difference "PIMTRG-PIM" is greater than or equal to the reference value -α, for example, the feedback control for the VN mechanism 41 is executed. That is, the feedback opening-amount VNFB is added to the VN opening amount VNFIN as a correction term. Then, the routine is terminated.

Next, after the routine restarts, a negative determination is made in step 140. That is, it is determined that the difference "PIMTRG-PIM" is greater than or equal to the reference value -α in step 140, and step 148 is performed. In step 148, it is determined whether the difference "PIMTRG-PIM" is smaller than 0, and is greater than or equal to the reference value -α. That is, it is determined whether the actual boost pressure PIM is higher than the target boost pressure PIMTRG, and the deviation of the actual boost pressure PIM from the target boost pressure PIMTRG is small. If it is determined that the difference "PIMTRG-PIM" is smaller than 0, and is greater than or equal to the reference value -α (i.e., if it is determined that the actual boost pressure PIM is higher than the target boost pressure PIMTRG, and the deviation of the actual boost pressure PIM from the target boost pressure PIMTRG is small) in step 148, step 150 is performed. In step 150, it is determined whether the difference "PIMTRG-PIM" was smaller than 0 in the immediately preceding routine (i.e., it is determined whether the actual boost pressure PIM was higher than the target boost pressure PIMTRG also in the immediately preceding routine). If it is determined that the difference "PIMTRG-PIM" was smaller than 0 in the immediately preceding routine (i.e., if it is determined that the actual boost pressure PIM was higher than the target boost pressure PIMTRG also in the immediately preceding routine), steps 114 and 116 are performed. Thus, when the actual boost pressure PIM is slightly higher than the target boost pressure PIMTRG, the actual boost pressure PIM is decreased by adding the feedback opening-amount VNFB to the VN opening amount VNFIN.

Then, after the actual boost pressure PIM decreases so that the difference "PIMTRG-PIM" is greater than or equal to 0 (i.e., after the actual boost pressure PIM reaches a value lower than or equal to the target boost pressure PIMTRG), a negative determination is made in step 148, and step 152 is performed. In step 152, it is determined whether the difference "PIMTRG-PIM" was smaller than 0 in the immediately preceding routine (i.e., it is determined whether the actual boost pressure PIM was higher than the target boost pressure PIMTRG in the immediately preceding routine, and the actual boost pressure PIM falls below the target boost pressure PIMTRG in the routine that is currently performed). If it is determined that the difference "PIMTRG-PIM" was smaller than 0 in the immediately preceding routine (i.e., if it is determined that the actual boost pressure PIM falls below the target boost pressure PIMTRG in the routine that is currently performed) in step 152, step 154 is performed. In step 154, electric power is supplied to the motor 26c to operate the MAT 26. Then, when it is determined that a predetermined time has elapsed in step 156, the supply of electric power is stopped to stop the MAT 26 in step 158. Because the turbo speed increases due to the operation of the MAT 26, it is possible to reduce the amount by which the actual boost pressure PIM falls below the target boost pressure PIMTRG. '

After the MAT 26 stops, steps 114 and 116 are performed. The feedback opening-amount VNFB is added to the VN opening amount VNFIN to decrease the VN opening amount VNFIN. As a result, the actual boost pressure PIM increases.

Then, after the actual boost pressure PIM increases so that the difference "PIMTRG-PIM" is smaller than 0, (i.e., after the actual boost pressure PIM reaches a value higher than the target boost pressure PIMTRG), an affirmative determination is made in step 148, and step 150 is performed. Because the difference "PIMTRG-PIM" was greater than or equal to 0 in the immediately preceding routine, a negative determination is made in step 150. That is, it is determined that the actual boost pressure PIM exceeds the target boost pressure PIMTRG in step 150. In this case, step 160 is performed. In step 160, a reverse load is applied to the motor 26c so that the MAT 26 performs the regenerative operation. Then, when it is determined that a predetermined time has elapsed in step 162, the regenerative operation of the motor 26c stops in step 164. Because the turbo speed decreases due to the regenerative operation of the MAT 26, it is possible to reduce the amount by which the actual boost pressure PIM exceeds the target boost pressure PIMTRG.

After the MAT 26 stops, steps 114 and 116 are performed. In step 116, the actual boost pressure PIM is decreased by adding the feedback opening-amount VNFB to the VN opening amount VNFIN.

As described above, in the routine in FIG. 6A and 6B, when the difference "PIMTRG-PIM" is smaller than the reference value -α, the actual boost pressure PIM is decreased by causing the MAT 26 to perform the regenerative operation, without calculating the feedback opening amount VNFB. When the difference "PIMTRG-PIM" changes from a value smaller than the reference value -α to a value smaller than 0 and greater than or equal to the reference value -α, the actual boost pressure PIN is decreased by stopping the MAT 26, and adding the feedback opening amount VNFB to the VN opening amount VNFIN. This reduces the amount of change in the VN opening amount VNFIN. As a result, the fluctuations in the VN opening amount VNFIN are suppressed. Accordingly, the actual boost pressure can be controlled to the target boost pressure PIMTRG quickly. Also, because the fluctuations in the VN opening amount VNFIN are suppressed, the fluctuations in the exhaust manifold pressure are suppressed. Thus, the fluctuations in the amount of EGR gas are prevented, and combustion is stably performed. Further, when the actual boost pressure PIM falls below the target boost pressure, the MAT 26 operates. Conversely, when the actual boost pressure PIM exceeds the target boost pressure PIMTRG, the MAT 26 performs the regenerative operation. This reduces the amount by which the actual boost pressure PIM falls below or exceeds the target boost pressure PIMTRG. This further suppresses the fluctuations in the VN opening amount VNFIN. As a result, the actual boost pressure PIM can be controlled to the target boost pressure PIMTRG quickly.

In the second embodiment, when the ECU 60 performs steps 140, 142, 144, 146, and 116, the "boost-pressure control means" in the first aspect is realized. When the ECU 60 performs step 114, "the opening-amount correction means" in the second aspect is realized. When the ECU 60 performs steps 140, 142, 144, 146, 116, 148, 150, 160, and 164, "the boost-pressure control means" in the third aspect is realized. When the ECU 60 performs steps 140, 142, 144, 146, 116, 148, 152, 154, and 158, "the boost-pressure control means" in the fourth aspect is realized.

While the invention has been described with reference to example embodiments thereof, it is to be understood that the invention is not limited to the example embodiments or constructions. To the contrary, the invention is intended to cover various modifications and equivalent arrangements. In addition, while the various elements of the example embodiments are shown in various combinations and configurations, which are exemplary, other combinations and configuration, including more, less or only a single element, are also within the scope of the invention defined by the claims.

## Claims

1. A boost-pressure control apparatus that includes:
a turbocharger including a compressor (26a) provided in an intake passage, a turbine (26b) provided in an exhaust passage, and a motor (26c) that drives the compressor (26a);
a boost-pressure detection means (16) for detecting actual boost pressure of air compressed by the turbocharger;
a target boost-pressure calculation means (60) for calculating target boost pressure based on an engine speed and an engine load;
a variable nozzle mechanism (41) that changes a flow speed of exhaust gas flowing to the turbine; and
a boost-pressure control means (60) that executes a boost-pressure control using the motor (26c) and a boost-pressure control using the variable nozzle mechanism (41), wherein when a deviation of the actual boost pressure from the target boost pressure is great, the boost-pressure control means gives a priority to the boost-pressure control using the motor (26c) over the boost-pressure control using the variable nozzle mechanism (41); and when the deviation is small, the boost-pressure control means gives a priority to the boost-pressure control using the variable nozzle mechanism (41) over the boost-pressure control using the motor (26c);
**characterised in that** when an absolute value of a difference between the target boost pressure and the actual boost pressure is greater than a reference value, the boost-pressure control means (60) gives a priority to the boost-pressure control using the motor (26c) over the boost-pressure control using the variable nozzle mechanism (41); and when the absolute value is smaller than the reference value, the boost-pressure control means (60) gives a priority to the boost-pressure control using the variable nozzle mechanism (41) over the boost-pressure control using the motor (26c).

2. The boost-pressure control apparatus according to claim 1, further comprising:
an opening-amount calculation means (60) for calculating an opening amount of the variable nozzle mechanism (41) based on the engine speed and the engine load; and
an opening-amount correction means (60) for correcting the opening amount calculated by the opening-amount calculation means (60), based on the deviation, wherein when the deviation is small, the boost-pressure control means (60) operates the variable nozzle mechanism (41) so that an actual opening amount of the variable nozzle mechanism (41) is equal to the opening amount corrected by the opening-amount correction means (60).

3. The boost-pressure control apparatus according to claim 2, wherein the boost-pressure control means (60) operates the variable nozzle mechanism (41) so that the actual opening amount is equal to a sum of a feedback opening-amount based on a difference between the target boost pressure and the actual boost pressure, and the opening amount calculated by the opening-amount calculation means (60).

4. The boost-pressure control apparatus according to claim 2 or 3, wherein when the deviation is small, the boost-pressure control means (60) operates the variable nozzle mechanism (41) so that the actual opening amount is equal to the opening amount corrected by the opening-amount correction means (60), and stops supply of electric power to the motor (26c).

5. The boost-pressure control apparatus according to claim 1, further comprising:
an opening-amount calculation means (60) for calculating an opening amount of the variable nozzle mechanism (41) based on the engine speed and the engine load, wherein when the deviation is great, the boost-pressure control means (60) executes the boost-pressure control using the motor (26c), and operates the variable nozzle mechanism (41) so that an actual opening amount of the variable nozzle mechanism (41) is equal to the opening amount calculated by the opening-amount calculation means (60).

6. The boost-pressure control apparatus according to claim 5,wherein when the deviation is great, and the actual boost pressure is lower than the target boost pressure, the boost-pressure control means (60) operates the motor (26c).

7. The boost-pressure control apparatus according to claim 5, wherein when the deviation is great, and the actual boost pressure is higher than the target boost pressure, the boost-pressure control means (60) causes the motor (26c) to perform regenerative operation.

8. The boost-pressure control apparatus according to any one of claims 1 to 7, wherein when the actual boost pressure exceeds the target boost pressure, the boost-pressure control means (60) causes the motor (26c) to perform regenerative operation for a predetermined time.

9. The boost-pressure control apparatus according to claim 8, wherein when the actual boost pressure exceeds the target boost pressure, the boost-pressure control means (60) causes the motor (26c) to perform the regenerative operation for the predetermined time while the feedback opening-amount remains fixed.

10. The boost-pressure control apparatus according to any one of claims 1 to 7, wherein when the actual boost pressure falls below the target boost pressure, the boost-pressure control means (60) operates the motor (26c) for a predetermined time.

11. The boost-pressure control apparatus according to claim 10, wherein when the actual boost pressure falls below the target boost pressure, the boost-pressure control means (60) operates the motor (26c) for the predetermined time while the feedback opening-amount remains fixed.

12. A boost-pressure control method comprising:
detecting a boost pressure of air compressed by a turbocharger;
calculating target boost pressure based on an engine speed and an engine load;
wherein, when the detected actual boost pressure deviates from the calculated target boost pressure by a great amount, a priority is given to a boost-pressure control using a motor over a boost-pressure control using a variable nozzle mechanism and, when the detected actual boost pressure deviates from the calculated target boost pressure by a small amount, a priority is given to the boost-pressure control using the variable nozzle mechanism over the boost-pressure control using the motor;
wherein,
when an absolute value of a difference between the target boost pressure and the actual boost pressure is greater than a reference value, a priority is given to the boost-pressure control using the motor over the boost-pressure control using the variable nozzle mechanism; and
when the absolute value is smaller than the reference value, a priority is given to the boost-pressure control using the variable nozzle mechanism over the boost-pressure control using the motor.

13. The boost-pressure control method according to claim 12, further comprising:
calculating an opening amount of the variable nozzle mechanism based on the engine speed and the engine load;
correcting the calculated opening amount based on the deviation; and
operating the variable nozzle mechanism so that an actual opening amount of the variable nozzle mechanism is equal to the corrected opening amount, when the deviation is small.

14. The boost-pressure control method according to claim 13, further **characterized in that**:
the variable nozzle mechanism is operated so that the actual opening amount is equal to a sum of a feedback opening amount based on a difference between the target boost pressure and the actual boost pressure, and the calculated opening amount.

15. The boost-pressure control method according to claim 13 or 14, further **characterized in that**:
the variable nozzle mechanism is operated so that the actual opening amount is equal to the corrected opening amount, and stops supply of electric power to the motor, when the deviation is small.

16. The boost-pressure control method according to claim 12, further comprising:
calculating an opening amount of the variable nozzle mechanism based on the engine speed and the engine load; and
executing the boost-pressure control using the motor, and operates the variable nozzle mechanism so that an actual opening amount of the variable nozzle mechanism is equal to the calculated opening amount, when the deviation is great.

17. The boost-pressure control method according to claim 16, further comprising:
operating the motor when the deviation is great, and the detected actual boost pressure is lower than the calculated target boost pressure.

18. The boost-pressure control method according to claim 16, further comprising:
causing the motor to perform regenerative operation when the deviation is great, and the detected actual boost pressure is higher than the calculated target boost pressure.

19. The boost-pressure control method according to any one of claims 12 to 18, further comprising:
running the motor in a regeneration mode for a predetermined time when the actual boost pressure exceeds the target boost pressure.

20. The boost-pressure control method according to claim 19, further **characterized in that**:
the motor is run in a regeneration mode for the predetermined time while the feedback opening amount is fixed when the actual boost pressure exceeds the target boost pressure.

21. The boost-pressure control method according to any one of claims 12 to 18, further **characterized in that**:
the motor is operated for a predetermined time when the actual boost pressure falls below the target boost pressure.

22. The boost-pressure control method according to claim 21, further **characterized in that**:
the motor is operated for the predetermined time while the feedback opening amount is fixed when the actual boost pressure falls below the target boost pressure.

## Patentansprüche

1. Ladedrucksteuergerät mit:
einem Turbolader mit einem Kompressor (26a), der in einem Einlasskanal vorgesehen ist, einer Turbine (26b), die in einem Abgaskanal vorgesehen ist, und einem Motor (26c), der den Kompressor (26a) antreibt;
einer Ladedruckerfassungseinrichtung (16) zum Erfassen eines Ist-Ladedrucks der Luft, die durch den Turbolader komprimiert wird;
einer Soll-Ladedruckberechnungseinrichtung (60) zum Berechnen eines Soll-Ladedrucks auf der Grundlage einer Drehzahl eines Verbrennungsmotors und einer Last des Verbrennungsmotors;
einem variablen Düsenmechanismus (41), der eine Strömungsgeschwindigkeit eines zu der Turbine strömenden Abgases ändert; und
einer Ladedrucksteuereinrichtung (60), die eine unter Verwendung des Motors (26c) erfolgende Ladedrucksteuerung ausführt, und eine unter Verwendung des variablen Düsenmechanismus (41) erfolgende Ladedrucksteuerung ausführt, wobei, wenn eine Abweichung des Ist-Ladedrucks von dem Soll-Ladedruck groß ist, die Ladedrucksteuereinrichtung eine Priorität der Ladedrucksteuerung, die den Motor (26c) verwendet, verleiht gegenüber der Ladedrucksteuerung, die den variablen Düsenmechanismus (41) verwendet; und, wenn die Abweichung gering ist, die Ladedrucksteuereinrichtung eine Priorität der Ladedrucksteuerung, die den variablen Düsenmechanismus (41) verwendet, verleiht gegenüber der Ladedrucksteuerung, die den Motor (26c) verwendet;
**dadurch gekennzeichnet, dass**
wenn ein Absolutwert einer Differenz zwischen dem Soll-Ladedruck und dem Ist-Ladedruck größer als ein Referenzwert ist, die Ladedrucksteuereinrichtung (60) eine Priorität der Ladedrucksteuerung, die den Motor (26c) verwendet, verleiht gegenüber der Ladedrucksteuerung, die den variablen Düsenmechanismus (41) verwendet; und wenn der Absolutwert geringer als der Referenzwert ist, die Ladedrucksteuereinrichtung (60) eine Priorität der Ladedrucksteuerung, die den variablen Düsenmechanismus (41) verwendet, verleiht gegenüber der Ladedrucksteuerung, die den Motor (26c) verwendet.

2. Ladedrucksteuervorrichtung gemäß Anspruch 1, die des Weiteren folgendes aufweist:
eine Öffnungsbetragberechnungseinrichtung (60) zum Berechnen eines Öffnungsbetrages des variablen Düsenmechanismus (41) auf der Grundlage der Drehzahl des Verbrennungsmotors und der Last des Verbrennungsmotors; und
eine Öffnungsbetragkorrektureinrichtung (60) zum Korrigieren des Öffnungsbetrages, der durch die Öffnungsbetragberechnungseinrichtung (60) berechnet worden ist, auf der Grundlage der Abweichung, wobei dann, wenn die Abweichung gering ist, die Ladedrucksteuereinrichtung (60) den variablen Düsenmechanismus (41) so betreibt, dass ein Ist-Öffnungsbetrag des variablen Düsenmechanismus (41) gleich ist dem Öffnungsbetrag, der durch die Öffnungsbetragkorrektureinrichtung (60) korrigiert worden ist.

3. Ladedrucksteuervorrichtung gemäß Anspruch 2, wobei
die Ladedrucksteuereinrichtung (60) den variablen Düsenmechanismus (41) so betreibt, dass der Ist-Öffnungsbetrag gleich ist einer Summe aus einem Rückführ-Öffnungsbetrag auf der Grundlage einer Differenz zwischen dem Soll-Ladedruck und dem Ist-Ladedruck, und dem Öffnungsbetrag, der durch die Öffnungsbetragberechnungseinrichtung (60) berechnet worden ist.

4. Ladedrucksteuervorrichtung gemäß Anspruch 2 oder 3, wobei
wenn die Abweichung gering ist, die Ladedrucksteuereinrichtung (60) den variablen Düsenmechanismus (41) so betreibt, dass der Ist-Öffnungsbetrag gleich ist dem Öffnungsbetrag, der durch die Öffnungsbetragkorrektureinrichtung (60) korrigiert worden ist, und die Lieferung von elektrischer Energie zu dem Motor (26c) anhält.

5. Ladedrucksteuervorrichtung gemäß Anspruch 1, die des Weiteren folgendes aufweist:
eine Öffnungsbetragberechnungseinrichtung (60) zum Berechnen eines Öffnungsbetrages des variablen Düsenmechanismus (41) auf der Grundlage der Drehzahl des Verbrennungsmotors und der Last des Verbrennungsmotors, wobei dann, wenn die Abweichung groß ist, die Ladedrucksteuereinrichtung (60) die Ladedrucksteuerung aufführt, die den Motor (26c) anwendet, und den variablen Düsenmechanismus (41) so betreibt, dass ein Ist-Öffnungsbetrag des variablen Düsenmechanismus (41) gleich ist dem Öffnungsbetrag, der durch die Öffnungsbetragberechnungseinrichtung (60) berechnet worden ist.

6. Ladedrucksteuervorrichtung gemäß Anspruch 5, wobei
wenn die Abweichung groß ist und der Ist-Ladedruck geringer als der Soll-Ladedruck ist, die Ladedrucksteuereinrichtung (60) den Motor (26c) betreibt.

7. Ladedrucksteuervorrichtung gemäß Anspruch 5, wobei
wenn die Abweichung groß ist und der Ist-Ladedruck höher als der Soll-Ladedruck ist, die Ladedrucksteuereinrichtung (60) den Motor (26c) dazu bringt, einen regenerativen Betrieb auszuführen.

8. Ladedrucksteuervorrichtung gemäß einem der Ansprüche 1 bis 7, wobei
wenn der Ist-Ladedruck den Soll-Ladedruck übersteigt, die Ladedrucksteuereinrichtung (60) den Motor (26c) dazu bringt, einen regenerativen Betrieb eine vorbestimmte Zeit lang auszuführen.

9. Ladedrucksteuervorrichtung gemäß Anspruch 8, wobei
wenn der Ist-Ladedruck den Soll-Ladedruck übersteigt, die Ladedrucksteuereinrichtung (60) den Motor (26c) dazu bringt, dass er den regenerativen Betrieb die vorbestimmte Zeitspanne lang ausführt, während der Rückführ-Öffnungsbetrag unverändert bleibt.

10. Ladedrucksteuervorrichtung gemäß einem der Ansprüche 1 bis 7, wobei
wenn der Ist-Ladedruck bis unterhalb des Soll-Ladedrucks abfällt, die Ladedrucksteuereinrichtung (60) den Motor (26c) eine vorbestimmte Zeitspanne lang betreibt.

11. Ladedrucksteuervorrichtung gemäß Anspruch 10, wobei
wenn der Ist-Ladedruck bis unter den Soll-Ladedruck abfällt, die Ladedrucksteuereinrichtung (60) den Motor (26c) die vorbestimmte Zeitspanne lang betreibt, während der Rückführ-Öffnungsbetrag unverändert bleibt.

12. Ladedrucksteuerverfahren mit den folgenden Schritten:
Erfassen eines Ladedrucks einer Luft, die durch einen Turbolader komprimiert wird;
Berechnen des Soll-Ladedrucks auf der Grundlage einer Drehzahl des Verbrennungsmotors und einer Last des Verbrennungsmotors;
wobei dann, wenn der erfasste Ist-Ladedruck von dem berechneten Soll-Ladedruck um einen großen Betrag abweicht, eine Priorität einer Ladedrucksteuerung, die einen Motor verwendet, verliehen wird gegenüber einer Ladedrucksteuerung, die einen variablen Düsenmechanismus verwendet, und dann, wenn der erfasste Ist-Ladedruck von dem berechneten Soll-Ladedruck um einen geringen Betrag abweicht, eine Priorität der Ladedrucksteuerung, die den variablen Düsenmechanismus verwendet, verliehen wird gegenüber der Ladedrucksteuerung, die den Motor verwendet;
wobei dann, wenn ein Absolutwert einer Differenz zwischen dem Soll-Ladedruck und dem Ist-Ladedruck größer als ein Referenzwert ist, eine Priorität der Ladedrucksteuerung, die den Motor anwendet, verliehen wird gegenüber der Ladedrucksteuerung, die den variablen Düsenmechanismus verwendet;
und, wenn der Absolutwert geringer als der Referenzwert ist, eine Priorität der Ladedrucksteuerung, die den variablen Düsenmechanismus verwendet, verliehen wird gegenüber der Ladedrucksteuerung, die den Motor verwendet.

13. Ladedrucksteuerverfahren gemäß Anspruch 12, das des Weiteren die folgenden Schritte aufweist:
Berechnen eines Öffnungsbetrages des variablen Düsenmechanismus auf der Grundlage der Drehzahl des Verbrennungsmotors und der Last des Verbrennungsmotors;
Korrigieren des berechneten Öffnungsbetrages auf der Grundlage der Abweichung; und
Betreiben des variablen Düsenmechanismus derart, dass ein Ist-Öffnungsbetrag des variablen Düsenmechanismus gleich wird dem korrigierten Öffnungsbetrag, wenn die Abweichung gering ist.

14. Ladedrucksteuerverfahren gemäß Anspruch 13, das des Weiteren **dadurch gekennzeichnet ist, dass**:
der variable Düsenmechanismus so betrieben wird, dass der Ist-Öffnungsbetrag gleich ist einer Summe aus einem Rückführ-Öffnungsbetrag auf der Grundlage einer Differenz zwischen dem Soll-Ladedruck und dem Ist-Ladedruck, und dem berechneten Öffnungsbetrag.

15. Ladedrucksteuerverfahren gemäß Anspruch 13 oder 14, das des Weiteren **dadurch gekennzeichnet ist, dass**:
der variable Düsenmechanismus so betrieben wird, dass der Ist-Öffnungsbetrag gleich ist dem korrigierten Öffnungsbetrag, und die Lieferung von elektrischer Energie zu dem Motor anhält, wenn die Abweichung gering ist.

16. Ladedrucksteuerverfahren gemäß Anspruch 12, das des Weiteren die folgenden Schritte aufweist:
Berechnen eines Öffnungsbetrages des variablen Düsenmechanismus auf der Grundlage der Drehzahl des Verbrennungsmotors und der Last des Verbrennungsmotors; und
Ausführen der Ladedrucksteuerung, die den Motor anwendet, und Betreiben des variablen Düsenmechanismus derart, dass ein Ist-Öffnungsbetrag des variablen Düsenmechanismus gleich ist dem berechneten Öffnungsbetrag, wenn die Abweichung groß ist.

17. Ladedrucksteuerverfahren gemäß Anspruch 16, das des Weiteren den folgenden Schritt aufweist:
Betreiben des Motors, wenn die Abweichung groß ist, und der erfasste Ist-Ladedruck geringer als der berechnete Soll-Ladedruck ist.

18. Ladedrucksteuerverfahren gemäß Anspruch 16, das des Weiteren den folgenden Schritt aufweist:
Bewirken, dass der Motor einen regenerativen Betrieb ausführt, wenn die Abweichung groß ist, und der erfasste Ist-Ladedruck höher als der berechnete Soll-Ladedruck ist.

19. Ladedrucksteuerverfahren gemäß einem der Ansprüche 12 bis 18, das des Weiteren den folgenden Schritt aufweist:
Laufenlassen des Motors in einem Regenerationsmodus eine vorbestimmte Zeit lang, wenn der Ist-Ladedruck den Soll-Ladedruck überschreitet.

20. Ladedrucksteuerverfahren gemäß Anspruch 19, das des Weiteren **dadurch gekennzeichnet ist, dass**:
der Motor in einem Regenrationsmodus eine vorbestimmte Zeitspanne lang läuft, während der Rückführ-Öffnungsbetrag unverändert ist, wenn der Ist-Ladedruck den Soll-Ladedruck überschreitet.

21. Ladedrucksteuerverfahren gemäß einem der Ansprüche 12 bis 18, das des Weiteren **dadurch gekennzeichnet ist, dass**:
der Motor eine vorbestimmte Zeitspanne lang betrieben wird, wenn der Ist-Ladedruck bis unterhalb des Soll-Ladedrucks abfällt.

22. Ladedrucksteuerverfahren gemäß Anspruch 21, das des Weiteren **dadurch gekennzeichnet ist, dass**:
der Motor die vorbestimmte Zeitspanne lang betrieben wird, während der Rückführ-Öffnungsbetrag unverändert ist, wenn der Ist-Ladedruck bis unterhalb des Soll-Ladedrucks abfällt.

## Revendications

1. Appareil de commande de pression de suralimentation qui comporte :
un turbocompresseur comportant un compresseur (26a) prévu dans un passage d'admission, une turbine (26b) prévue dans un passage d'échappement, et un moteur (26c) qui entraîne le compresseur (26a) ;
un moyen de détection de pression de suralimentation (16) destiné à détecter une pression de suralimentation effective de l'air comprimé par le turbocompresseur ;
un moyen (60) de calcul de pression de suralimentation cible destiné à calculer une pression de suralimentation cible sur la base d'un régime moteur et d'une charge du moteur ;
un mécanisme à tuyère variable (41) qui change une vitesse d'écoulement du gaz d'échappement s'écoulant dans la turbine ; et
un moyen (60) de commande de pression de suralimentation qui exécute une commande de pression de suralimentation utilisant le moteur (26c) et une commande de pression de suralimentation utilisant le mécanisme à tuyère variable (41), dans lequel lorsqu'une déviation de la pression de suralimentation effective par rapport à la pression de suralimentation cible est importante, le moyen de commande de pression de suralimentation donne la priorité à la commande de pression de suralimentation qui utilise le moteur (26c) par rapport à la commande de pression de suralimentation qui utilise le mécanisme à tuyère variable (41): et lorsque la déviation est faible, le moyen de commande de pression de suralimentation donne la priorité à la commande de pression de suralimentation qui utilise le mécanisme à tuyère variable (41) par rapport à la commande de pression de suralimentation qui utilise le moteur (26c) ;
**caractérisé en ce que** lorsqu'une valeur absolue d'une différence entre la pression de suralimentation cible et la pression de suralimentation effective est plus importante qu'une valeur de référence, le moyen (60) de commande de pression de suralimentation donne la priorité à la commande de pression de suralimentation qui utilise le moteur (26c) par rapport à la commande de pression de suralimentation qui utilise le mécanisme à tuyère variable (41) ; et lorsque la valeur absolue est plus petite que la valeur de référence, le moyen (60) de commande de pression de suralimentation donne la priorité à la commande de pression de suralimentation qui utilise le mécanisme à tuyère variable (41) par rapport à la commande de pression de suralimentation qui utilise le moteur (26c).

2. Appareil de commande de pression de suralimentation selon la revendication 1, comprenant en outre :
un moyen (60) de calcul d'une quantité d'ouverture destiné à calculer une quantité d'ouverture du mécanisme à tuyère variable (41) sur la base du régime moteur et de la charge du moteur ; et
un moyen (60) de correction de la quantité d'ouverture destiné à corriger la quantité d'ouverture calculée par le moyen (60) de calcul d'une quantité d'ouverture, sur la base de la déviation, dans lequel lorsque la déviation est faible, le moyen (60) de commande de pression de suralimentation actionne le mécanisme à tuyère variable (41) de façon à ce qu'une quantité d'ouverture effective du mécanisme à tuyère variable (41) soit égale à la quantité d'ouverture corrigée par le moyen (60) de correction de la quantité d'ouverture.

3. Appareil de commande de pression de suralimentation selon la revendication 2, dans lequel le moyen (60) de commande de la pression de suralimentation actionne le mécanisme à tuyère variable (41) de façon à ce que la quantité d'ouverture effective soit égale à une somme d'une quantité d'ouverture de réintroduction sur la base d'une différence entre la pression de suralimentation cible et la pression de suralimentation effective, et la quantité d'ouverture calculée par le moyen (60) de calcul d'une quantité d'ouverture.

4. Appareil de commande de pression de suralimentation selon la revendication 2 ou 3, dans lequel lorsque la déviation est faible, le moyen (60) de commande de pression de suralimentation actionne le mécanisme à tuyère variable (41) de façon à ce que la quantité d'ouverture effective soit égale à la quantité d'ouverture corrigée par le moyen (60) de correction de la quantité d'ouverture, et arrête l'alimentation de puissance électrique au moteur (26c).

5. Appareil de commande de pression de suralimentation selon la revendication 1, comprenant en outre :
un moyen (60) de calcul d'une quantité d'ouverture destiné à calculer une quantité d'ouverture du mécanisme à tuyère variable (41) sur la base d'un régime moteur et d'une charge du moteur, dans lequel lorsque la déviation est importante, le moyen (60) de commande de pression de suralimentation exécute la commande de pression de suralimentation utilisant le moteur (26c), et actionne le mécanisme à tuyère variable (41) de façon à ce qu'une quantité d'ouverture effective du mécanisme à tuyère variable (41) soit égale à la quantité d'ouverture calculée par le moyen (60) de calcul d'une quantité d'ouverture.

6. Appareil de commande de pression de suralimentation selon la revendication 5, dans lequel lorsque la déviation est importante, et que la pression de suralimentation effective est plus faible que la pression de suralimentation cible, le moyen (60) de commande de pression de suralimentation actionne le moteur (26c).

7. Appareil de commande de pression de suralimentation selon la revendication 5, dans lequel lorsque la déviation est importante, et que la pression de suralimentation effective est plus élevée que la pression de suralimentation cible, le moyen (60) de commande de pression de suralimentation amène le moteur (26c) à effectuer une opération régénérative.

8. Appareil de commande de pression de suralimentation selon l'une quelconque des revendications 1 à 7, dans lequel lorsque la pression de suralimentation effective dépasse la pression de suralimentation cible, le moyen (60) de commande de pression de suralimentation amène le moteur (26c) à effectuer une opération régénérative pendent une durée prédéterminée.

9. Appareil de commande de pression de suralimentation selon la revendication 8, dans lequel lorsque la pression de suralimentation effective dépasse la pression de suralimentation cible, le moyen (60) de commande de pression de suralimentation amène le moteur (26c) à effectuer l'opération régénérative pendant une durée prédéterminée tandis que la quantité d'ouverture de réintroduction reste fixe.

10. Appareil de commande de pression de suralimentation selon l'une quelconque des revendications 1 à 7, dans lequel lorsque la pression de suralimentation effective passe sous pression de suralimentation cible, le moyen (60) de commande de pression de suralimentation actionne le moteur (26c) pendent une durée prédéterminée.

11. Appareil de commande de pression de suralimentation selon la revendication 10, dans lequel lorsque la pression de suralimentation effective passe sous la pression de suralimentation cible, le moyen (60) de commande de pression de suralimentation actionne le moteur (26c) pendant la durée prédéterminée tandis que la quantité d'ouverture de réintroduction reste fixe.

12. Procédé de commande de pression de suralimentation comprenant le fait :
de détecter une pression de suralimentation de l'air comprimé par un turbocompresseur ;
de calculer une pression de suralimentation cible sur la base d'un régime moteur et d'une charge du moteur ;
dans lequel, lorsque la pression de suralimentation effective détectée dévie de la pression de suralimentation cible calculée par une quantité importante, on donne la priorité à une commande de pression de suralimentation utilisant un moteur par rapport à une commande de pression de suralimentation utilisant un mécanisme à tuyère variable et, lorsque la pression de suralimentation effective détectée dévie par rapport à la pression de suralimentation cible calculée par une quantité faible, on donne la priorité à la commande de pression de suralimentation utilisant le mécanisme à tuyère variable par rapport à la commande de pression de suralimentation utilisant le moteur ;
dans lequel,
lorsqu'une valeur absolue d'une différence entre la pression de suralimentation cible et la pression de suralimentation effective est plus importante qu'une valeur de référence, on donne la priorité à la commande de pression de suralimentation utilisant le moteur par rapport à la commande de pression de suralimentation utilisant le mécanisme à tuyère variable ; et
lorsque la valeur absolue est plus petite que la valeur de référence, on donne la priorité à la commande de pression de suralimentation utilisant le mécanisme à tuyère variable par rapport à la commande de pression de suralimentation utilisant le moteur.

13. Procédé de commande de pression de suralimentation selon la revendication 12, comprenant en outre le fait :
de calculer une quantité d'ouverture du mécanisme à tuyère variable sur la base du régime moteur et de la charge du moteur ;
de corriger la quantité d'ouverture calculée sur la base de la déviation ; et
d'actionner le mécanisme à tuyère variable de façon à ce qu'une quantité d'ouverture effective du mécanisme à tuyère variable soit égale à la quantité d'ouverture corrigée, lorsque la déviation est faible.

14. Procédé de commande de pression de suralimentation selon la revendication 13, **caractérisé en outre en ce que** :
le mécanisme à tuyère variable est actionné de façon à ce que la quantité d'ouverture effective soit égale à une somme d'une quantité d'ouverture de réintroduction sur la base d'une différence entre la pression de suralimentation cible et la pression de suralimentation effective, et la quantité d'ouverture calculée.

15. Procédé de commande de pression de suralimentation selon la revendication 13 ou 14, **caractérisé en outre en ce que** :
le mécanisme à tuyère variable est actionné de façon à ce que la quantité d'ouverture effective soit égale à la quantité d'ouverture corrigée, et arrête l'alimentation de puissance électrique au moteur, lorsque la déviation est faible.

16. Procédé de commande de pression de suralimentation selon la revendication 12, comprenant en outre le fait :
de calculer une quantité d'ouverture du mécanisme à tuyère variable sur la base du régime moteur et de la charge du moteur ; et
d'exécuter la commande de pression de suralimentation utilisant le moteur, et d'actionner le mécanisme à tuyère variable de façon à ce qu'une quantité d'ouverture effective du mécanisme à tuyère variable soit égale à la quantité d'ouverture calculée, lorsque la déviation est importante.

17. Procédé de commande de pression de suralimentation selon la revendication 16, comprenant en outre le fait :
d'actionner le moteur lorsque la déviation est importante, et que la pression de suralimentation effective détectée est plus faible que la pression de suralimentation cible calculée.

18. Procédé de commande de pression de suralimentation selon la revendication 16, comprenant en outre le fait :
d'amener le moteur à effectuer une opération régénérative lorsque la déviation est importante, et que la pression de suralimentation effective détectée est plus élevée que la pression de suralimentation cible calculée.

19. Procédé de commande de pression de suralimentation selon l'une quelconque des revendications 12 à 18, comprenant en outre le fait :
de faire fonctionner le moteur dans un mode de régénération pendant une durée prédéterminée lorsque la pression de suralimentation effective dépasse la pression de suralimentation cible.

20. Procédé de commande de pression de suralimentation selon la revendication 19, **caractérisé en outre en ce que** :
le moteur fonctionne dans un mode de régénération pendant la durée prédéterminée tandis que la quantité d'ouverture de réintroduction est fixe lorsque la pression de suralimentation effective dépasse la pression de suralimentation cible.

21. Procédé de commande de pression de suralimentation selon l'une quelconque des revendications 12 à 18, **caractérisé en outre en ce que** :
le moteur est actionné pendant une durée prédéterminée lorsque la pression de suralimentation effective passe sous la pression de suralimentation cible.

22. Procédé de commande de pression de suralimentation selon la revendication 21, **caractérisé en outre en ce que** :
le moteur est actionné pendant la durée prédéterminée tandis que la quantité d'ouverture de réintroduction est fixe lorsque la pression de suralimentation effective passe sous la pression de suralimentation cible.
